# EUROPÄISCHE PATENTSCHRIFT

(11) **EP 2 382 943 B1**
(45) Veröffentlichungstag und Bekanntmachung des Hinweises auf die Patenterteilung: **16.11.2016**
(21) Anmeldenummer: 11160761.0
(22) Anmeldetag: 31.03.2011
(51) Int. Cl.: A61C 8/00

(54) **Abutment für ein Implantatsystem**
Abutment for an implant system
Butée pour un système d'implant

(30) Priorität: 29.04.2010 DE 102010019387
(43) Veröffentlichungstag der Anmeldung: 02.11.2011
(73) Patentinhaber: nt-trading GmbH & Co. KG, 76187 Karlsruhe (DE)
(72) Erfinder: Jahn, Dirk, 76835 Weyher (DE)
(74) Vertreter: Patentanwälte Ruff, Wilhelm, Beier, Dauster & Partner mbB

(56) Entgegenhaltungen:
- US-A- 4 850 870
- US-A- 4 886 456
- US-A- 5 006 069
- US-A- 5 118 295
- US-A- 5 368 483
- US-A1- 2004 121 285
- US-A1- 2009 047 630

## Beschreibung

Die Erfindung betrifft ein Abutment nach dem Oberbegriff des Patentanspruchs 1.

Ein derartiges Abutment ist aus der US 4850870 bekannt. Das bekannte Abutment ist einstückig gestaltet und weist einen Fußabschnitt zur Verankerung in einem Implantat sowie einen Kopfabschnitt zur Aufnahme einer Krone auf. Der Kopfabschnitt ist an seinem oberen Stirnende mit einem koaxial zur Längsachse des Abutments erstreckten Innengewinde versehen, das als Gewindesackloch zur Befestigung einer Befestigungsschraube dient, um die Krone auf dem Abutment zu fixieren. Der obere Stirnendbereich des Kopfabschnittes weist zudem einen außenseitigen Befestigungsbereich zur Ausrichtung und formschlüssigen Sicherung einer konusförmigen Hülse auf, auf der die Krone aufgebaut ist. Der Befestigungsbereich dient zum indexierten Aufsetzen der konischen Hülse mittels einer entsprechend korrespondierend gestalteten Innenprofilierung. Hierdurch kann die Hülse in einer definierten Ausrichtung auf den Kopfabschnitt aufgesteckt werden und ist nach dem Aufstecken verdrehsicher auf dem Kopfabschnitt 50 gehalten.

Aus der US 2006/0183078 A1 ist ein Implantat bekannt, in das ein Abutment einschraubbar ist. Das Abutment ist in einem Kopfbereich mit einem Sackloch versehen, das unten positionierte Werkzeugangriffsflächen sowie ein darüber liegendes Innengewinde aufweist.

Ein weiteres Abutment ist aus der US 2009/0208906 A1 bekannt. Ein ähnliches Abutment ist in der EP 1 679 049 A1 offenbart.

Ein weiteres Abutment für ein Dentalimplantat ist aus der DE 11 2005 003 621 T5 bekannt. Das bekannte Abutment weist einen rotationsunsymmetrisch gestalteten Kopfabschnitt für die Aufnahme einer Zahnprothesenkomponente sowie einen Wurzelabschnitt für die Fixierung des Abutments in einem in einem humanen Knochen verankerten Implantat auf. Das Abutment ist aus Titan hergestellt.

Abutments für Zahnprothesekomponenten werden - abhängig von der individuellen Kieferknochenverankerung des Implantats mit einem zum Wurzelabschnitt fluchtend oder winklig (anguliert) abragenden Kopfabschnitt versehen. Dadurch ist es bei bekannten Implantatsystemen not-wendig, eine Vielzahl von unterschiedlich angulierten Abutments vorzuhalten.

Aufgabe der Erfindung ist es, ein Abutment der eingangs genannten Art zu schaffen, das einfach gestaltet und auch für dentale Brücken- oder Stegkonstruktionen einsetzbar ist.

Diese Aufgabe wird durch die Merkmale des Patentanspruchs 1 gelöst. Die rotationssymmetrische Gestaltung des Kopfabschnittes in Verbindung mit der zu seiner Stirnseite verlaufenden Verjüngung ermöglicht einen universalen, standardisierten Einsatz des erfindungsgemäßen Abutments sowohl für mit einer Implantatlängsachse fluchtende als auch für zu der Implantatlängsachse winklige Prothesenkomponenten. Die erfindungsgemäße Lösung eignet sich in besonders vorteilhafter Weise für Dentalimplantatsysteme und entsprechende dentale Prothesenkomponenten. Grundsätzlich ist die erfindungsgemäße Lösung auch für andere Humanimplantatsysteme mit entsprechenden Humanprothesenkomponenten wie Finger- oder Zehenknochen u.ä. geeignet. Die zur Stirnseite verjüngte Gestaltung der Mantelfläche des Kopfabschnittes kann linear, ballig oder eingeschnürt oder auch stufenweise vorgesehen sein.

Durch die erfindungsgemäße einstückige Gestaltung des Abutments mit einem Kopfabschnitt, in dem eine Gewindebohrung vorgesehen ist, sowie mit einem Wurzelabschnitt, der mit einem Außengewinde versehen ist, kann das Abutment in ein entsprechendes Implantat eingeschraubt werden. Zudem kann von oben her eine entsprechende prothetische Komponente auf das Abutment aufgesetzt und mit diesem verschraubt werden. Alternativ kann ein Adapterteil mit dem Kopfabschnitt des Abutments verschraubt werden. Das einstückige Abutment weist demzufolge mehrere Befestigungsfunktionen auf, die in dieser Form aus dem Stand der Technik nicht bekannt sind. Durch die rotationssymmetrische Gestaltung des Kopfabschnittes kann zudem auf eine durch einen Index oder eine Codierung vorgegebene, formschlüssig fixierte Drehausrichtung des Abutments relativ zum Implantat verzichtet werden. Dies erleichtert die Montage des Abutments im Implantat.

Durch die erfindungsgemäße Lösung ist eine besonders einfache Montage einer prothetischen Komponente auf dem Abutment erzielbar.

Das Außengewinde der Befestigungsschraube ist komplementär zu dem Innengewinde der Bohrung im Kopfabschnitt ausgeführt.

Erfindungsgemäß ist es möglich, das Abutment mittels eines geeigneten Drehwerkzeugs in Form eines Imbusschlüssels o.ä. in das Implantat einzudrehen Die Bohrung mit dem Innengewinde und die darüberliegende Aussparung stellen ein Sackloch in dem Kopfabschnitt dar.

In Ausgestaltung der Erfindung steigt eine obere Randfläche einer Ringschulter des Kopfabschnittes gegenüber einer Radialen zur Mittellängsachse geringfügig in einem Winkelbereich zwischen 1° und 2° nach außen an. Vorzugsweise beträgt der Winkel exakt 1,11°. Dadurch ist eine sichere Positionierung eines unteren Stirnrandes des Adapterteiles auf der Ringschulter in montiertem Zustand ermöglicht.

In weiterer Ausgestaltung der Erfindung ist der Kopfabschnitt konisch verjüngt gestaltet. Eine entsprechende Kegelstumpfform ist einfach und kostengünstig herstellbar.

In weiterer Ausgestaltung der Erfindung ist eine Neigung der Mantelfläche des Kopfabschnittes relativ zu der Mittellängsachse in einem Winkelbereich zwischen 0° und 25° vorgesehen. Besonders bevorzugt sind Winkelbereiche zwischen 12° und 15°, das entspricht Abutments mit Angulationen zwischen 12° und 15°.

In weiterer Ausgestaltung der Erfindung ist dem Kopfabschnitt ein separates, glockenartiges Adapterteil zugeordnet, dessen Innenmantel komplementär zu der Mantelfläche des Kopfabschnittes rotationssymmetrisch und verjüngt gestaltet ist. Das Abutment und das Adapterteil bilden ein mehrgliedriges Abutmentsystem, wobei das Adapterteil mit der zahnprothetischen Komponente verbunden, insbesondere verklebt wird und anschließend diese Einheit aus zahnprothetischer Komponente und Adapterteil mit dem Abutment verbunden wird. Das Adapterteil umschließt den Kopfabschnitt passgenau und koaxial, so dass es vor seiner Fixierung auf dem Kopfabschnitt verdreht werden kann. Das Adapterteil wird demzufolge rotationsungesichert auf den Kopfabschnitt aufgesetzt. Auch das Abutment selbst ist rotationsungesichert in ein entsprechendes Implantat eingebracht. Diese Ausgestaltung ist besonders vorteilhaft für Brücken- oder Stegkonstruktionen, die auf zwei oder mehr beabstandeten Abutments positionierbar sind. Die Abutments selbst sind jeweils im Implantat in beliebiger Drehausrichtung, das heißt ohne Codierung oder Indizierung, positioniert, da die feste Zuordnung über das Aufsetzen der Adapterteile erfolgt, die vorzugsweise in der entsprechenden Brücken- oder Stegkonstruktion bereits fixiert, insbesondere eingeklebt, sind, bevor die Konstruktion auf die Kopfabschnitte der Adapterteile aufgesetzt wird. An Oberseiten der Brücken- oder Stegkonstruktion, das heißt auf der dem entsprechenden Kieferabschnitt gegenüberliegenden Seite, sind Bohrungen vorgesehen, durch die hindurch die eingebetteten Adapterteile mit den Abutments verschraubt werden können.

In weiterer Ausgestaltung der Erfindung weist das glockenartige Adapterteil eine zu einer Mittellängsachse konzentrische Durchtrittsöffnung auf, die von einer als Auflagefläche für ein Befestigungselement dienenden Ringschulter umgrenzt ist. Die Durchtrittsöffnung ist dazu vorgesehen, ein durch das Adapterteil hindurchragendes Befestigungselement, insbesondere eine Kopfschraube, aufzunehmen.

In weiterer Ausgestaltung der Erfindung ist ein Außenmantel des Adapterteiles rotationssymmetrisch zu der Mittellängsachse und zu einem Stirnende hin verjüngt gestaltet. Dies ist eine besonders einfach herzustellende Oberfläche, die einen einfachen, passgenauen Einsatz in eine komplementäre Zahnprothesenkomponente ermöglicht. Die Zahnprothesenkomponente weist vorzugsweise eine Aussparung auf, die korrespondierend rotationssymmetrisch und verjüngt zu ihrem Aussparungsgrund gestaltet ist. Eine Befestigung der Zahnprothesenkomponente auf dem Außenmantel des Adapterteils erfolgt vorzugsweise durch Verklebung. Die Zahnprothesenkomponente weist eine mit der Durchtrittsöffnung koaxial fluchtende Durchgangsbohrung auf, um das Hindurchführen eines Befestigungsmittels, insbesondere einer Schraube, zu ermöglichen.

In weiterer Ausgestaltung der Erfindung sind das Abutment und/oder das Adapterteil aus Metall, insbesondere Titan, und/oder Keramik, insbesondere Zirconiumoxid aufgebaut. Diese Materialien sind für Humanimplantatsysteme, insbesondere für Zahnimplantatsysteme, besonders geeignet.

In weiterer Ausgestaltung der Erfindung sind der Kopfabschnitt und das Adapterteil stoff- oder kraftschlüssig miteinander verbindbar. In vorteilhafter Weise erfolgt der Verbund der entsprechenden Teile durch Verklebung, oder durch Kraftschluss mittels Verschraubung oder Presspassung. Dadurch, dass die erfindungsgemäßen Komponenten rotationssymmetrisch gestaltet sind, sind die Teile in unterschiedlichen, bedarfsbezogenen Rotationspositionen relativ zueinander ausrichtbar und anschließend durch Verklebung, Verschraubung oder eine andere Form des Kraft- oder Stoffschlusses in der gewünschten Position fixierbar. Dies ist besonders vorteilhaft für prothetische Brücken- oder Stegkonstruktionen, die auf wenigstens zwei Abutments und damit auf wenigstens zwei Dentalimplantaten fixierbar sind.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt perspektivische Anordnungen erfindungsgemäßer Abutments in Zahnimplantatsystemen,
- Fig. 2: in vergrößerter Darstellung ein Abutment nach Fig. 1,
- Fig. 3: eine Längsschnittdarstellung des Abutments nach Fig. 2,
- Fig. 4: in vergrößerter Darstellung einen Ausschnitt IV des Abutments in Fig. 3,
- Fig. 5: eine Draufsicht auf das Abutment nach den Fig. 2 und 3,
- Fig. 6: das Abutment nach Fig. 2 in perspektivischer Darstellung,
- Fig. 7: in perspektivischer, explosionsartiger Darstellung ein mehrteiliges Abutment, wobei ein Adapterteil in eine Zahnkrone eingebracht ist,
- Fig. 8: das Adapterteil des zweiteiligen Abutments nach Fig. 7 in einer Draufsicht,
- Fig. 9: das Adapterteil nach Fig. 8 in perspektivischer Darstellung schräg von unten,
- Fig. 10: das Adapterteil nach Fig. 8 in perspektivischer Darstellung schräg von oben und
- Fig. 11: einen Längsschnitt durch das Adapterteil nach Fig. 8.

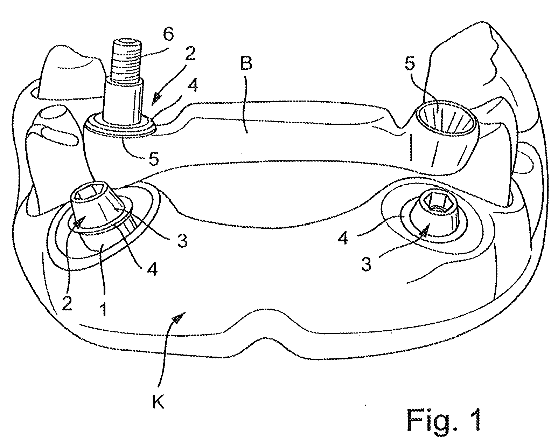

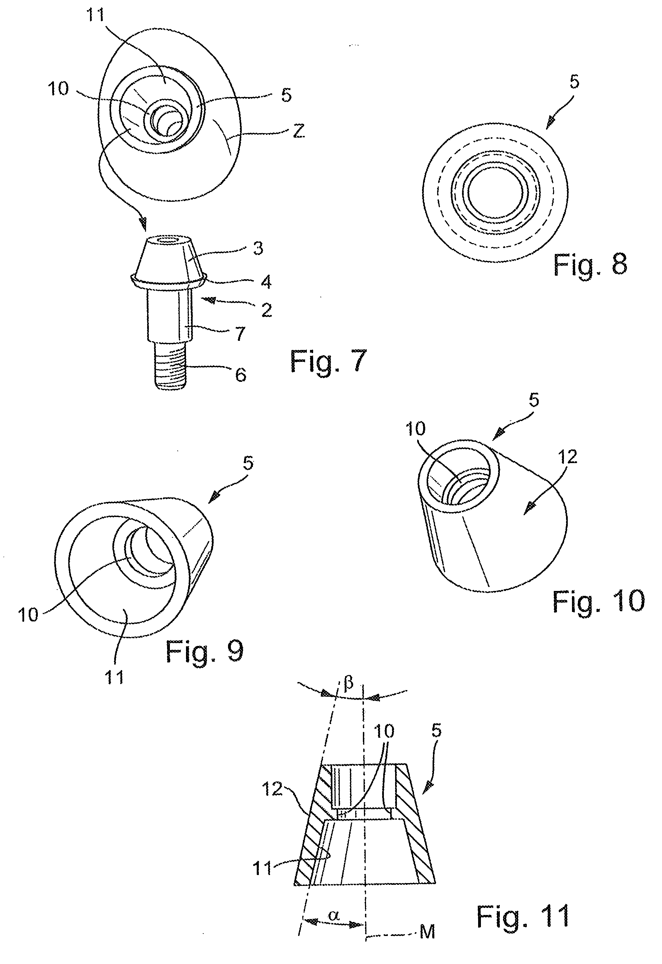

Ein Zahnimplantatsystem, das auch als Dentalimplantatsystem bezeichnet wird, weist eines oder mehrere Implantate 1 auf, die in grundsätzlich bekannter Weise in ein Knochenlager innerhalb eines Kieferknochens K eingebracht werden und dort einwachsen. Die Implantate 1 werden je nach individueller Knochenstruktur im Kieferknochen K ausgerichtet. Um in dem entsprechenden Implantat 1 eine Zahnprothesenkomponente wie eine Brücke B (Fig. 1) oder eine Zahnkrone Z (Fig. 7) fixieren zu können, sind ein- oder mehrteilige Abutments 2,5 vorgesehen, die nachfolgend anhand der Fig. 1 bis 11 näher beschrieben werden.

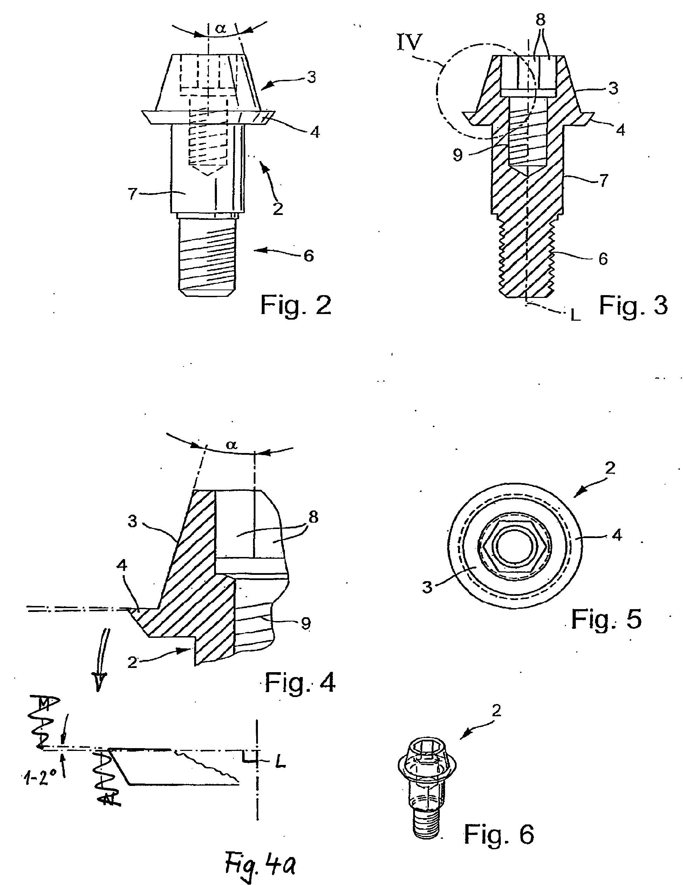

Ein Abutment 2 gemäß den Fig. 2 bis 7 ist aus Titan hergestellt und ist im Wesentlichen rotationssymmetrisch zu einer Mittellängsachse L (Fig. 3) gestaltet. Das Abutment 2 weist einen mit einem Außengewinde versehenen Wurzelabschnitt 6, 7 auf, der durch einen mittleren zylindrischen Abschnitt und einen unteren Gewindeabschnitt gebildet ist. Der Gewindeabschnitt umfasst ein Außengewinde, das in nicht näher dargestellter Weise in ein entsprechendes Innengewinde des Implantates 1 einschraubbar ist. Nach oben schließt an den Wurzelabschnitt 6, 7 ein Kopfabschnitt 3 an, der eine kegelstumpfförmige Mantelfläche und eine die Mantelfläche nach unten begrenzende Ringschulter 4 umfasst. Die sich konisch verjüngende Mantelfläche weist relativ zur Mittellängsachse L eine Neigung α auf, die beim dargestellten Ausführungsbeispiel 14,6° beträgt.

Das Außengewinde des Gewindeabschnittes 6 ist ein M2-Gewinde. Das Abutment 2 gemäß Fig. 2 weist eine Gesamthöhe von etwa 10 mm auf.

Das Abutment 2 ist ausgehend von einem oberen Stirnende des Kopfabschnittes 3 mit einem Sackloch versehen, das ein Innengewinde 9 und oberhalb des Innengewindes 9 Werkzeugangriffsflächen für ein Drehwerkzeug in Form eines Achtkant-Schlüssels, insbesondere eines Imbusschlüssels, umfasst. Der Durchmesser der Gewindebohrung 9 ist geringer als der Durchmesser der Achtkant-Aussparung, die die Werkzeugangriffsflächen 8 bildet. Mittels dieser Werkzeugangriffsflächen 8 ist es möglich, das Abutment 2 in das Implantat 1 unter Zuhilfenahme eines geeigneten Werkzeuges einzuschrauben. Der Kopfabschnitt 3 und der Wurzelabschnitt 6,7 sind aus einem einstückigen Massivkörper gebildet, der entsprechend bearbeitet wurde.

Die Mantelfläche des Kopfabschnittes 3 des Abutments 2 dient zur Aufnahme einer Zahnprothesenkomponente wie insbesondere einer Krone Z oder einer Brücke B. Die entsprechende Zahnprothesenkomponente wird im Bereich ihrer Unterseite komplementär zu dem konischen Kopfabschnitt 3 bearbeitet, indem eine sich entsprechend konisch zu ihrem Grund verjüngende Aussparung in einer Unterseite der Zahnprothesenkomponente vorgenommen wird. Zudem wird von einer Oberseite her in die Zahnprothesenkomponente eine Bohrung koaxial zu der konischen Aussparung eingebracht, die die Zahnprothesenkomponente von oben her durchdringt. Die Zahnprothesenkomponente wird mittels ihrer konischen Aussparung spielfrei und passgenau auf den Kopfabschnitt 3 aufgesetzt, wodurch ihr Rand auf der Ringschulter 4 des Abutments 2 zur Auflage kommt. Die entsprechende Fixierung kann durch eine Kopfschraube erfolgen, die von oben her durch die Zahnprothesenkomponente hindurch gesteckt und anschließend in der Gewindebohrung 9 des Sackloches des Abutments 2 fixiert wird. Dadurch wird die Zahnprothesenkomponente gegen die konische Mantelfläche 3 und gegen die als Ringanschlag dienende Ringschulter 4 des Abutments 2 gepresst. Ergänzend oder alternativ ist es möglich, eine entsprechend bearbeitete Zahnprothesenkomponente mit dem Kopfabschnitt 3 des Abutments 2 zu verkleben.

Gemäß der weiteren, in den Figuren 1 und 7 dargestellten Ausführungsform ist das Abutment als System zweiteilig gestaltet, indem dem Abutment 2 zusätzlich ein glockenförmiges Adapterteil 5 zugeordnet ist (Figuren 7 bis 11). Das Adapterteil 5 ist im Wesentlichen kegelstumpfförmig gestaltet und weist - in Einbaulage von oben her gesehen - eine zylindrische Aufnahmebohrung auf, die unter Bildung einer Ringschulter 10 in eine Durchgangsbohrung geringeren Durchmessers übergeht. Nach unten erweitert sich eine Innenmantelfläche 11 des Adapterteiles 5 kegelstumpfförmig und damit konisch. Die Innenmantelfläche 11 des Adapterteiles 5 ist in demselben Winkel α zu einer Mittellängsachse M des Adapterteiles 5 geneigt, in dem die Mantelfläche des Kopfabschnittes 3 des Abutments 2 relativ zur Mittellängsachse L geneigt ist. Eine Tiefe der Innenmantelfläche 11 - längs der Mittellängsachse M gesehen - ist nahezu identisch mit einer Höhe der Mantelfläche des Kopfabschnittes 3. Auch obere und untere Randdurchmesser der Kegelstumpfabschnitte sind im Wesentlichen identisch zueinander, so dass ein spielfreies, passgenaues und vollständiges Aufsetzen des Adapterteiles 5 auf den Kopfabschnitt 3 ermöglicht ist.

Eine obere Randfläche der Ringschulter 4 des Kopfabschnittes 3 steigt gegenüber einer Radialen zur Mittellängsachse L geringfügig im Bereich zwischen 1° und 2°, vorliegend exakt in einem Winkel von 1,11° nach außen an. Dadurch ist eine sichere Positionierung eines unteren Stirnrandes des Adapterteiles 5 auf der Ringschulter 4 in montiertem Zustand ermöglicht.

Ein Außenmantel des Adapterteiles 5 ist relativ zur Innenmantelfläche 11 geringfügig steiler ausgerichtet. Beim vorliegenden Ausführungsbeispiel ergibt sich für einen entsprechenden Winkel β einer Oberfläche des Außenmantels 12 relativ zur Mittellängsachse M ein Betrag von 13° gegenüber 14,6° für den Winkel α. Auch das Adapterteil 5 ist beim dargestellten Ausführungsbeispiel aus Titan hergestellt. Gemäß nicht dargestellten Ausführungsformen der Erfindung kann es, wie auch das Abutment 2, statt aus Metall auch aus einer geeigneten Hochleistungskeramik hergestellt sein.

Das Adapterteil 5 ist dazu vorgesehen, gemäß Figur 1 oder 7 in eine entsprechende Aussparung einer Zahnprothesenkomponente wie einer Brücke B, einer Zahnkrone Z oder ähnlichem eingesetzt und stoffschlüssig flächig mit einer entsprechenden Aussparung der Zahnprothesenkomponente verbunden zu werden. Dabei wird vorzugsweise zunächst das Adapterteil 5 bündig in die Zahnprothesenkomponente eingebracht und anschließend die Einheit aus Zahnprothesenkomponente und Adapterteil 5 auf das entsprechende Abutment 2 und dort auf den entsprechenden Kopfabschnitt 3 aufgesetzt. Anschließend wir das Adapterteil 5 einschließlich der Zahnprothesenkomponente durch eine entsprechende Kopfschraube, die von oben her durch die Zahnprothesenkomponente und in das Adapterteil 5 eingebracht wird und auf der Auflageschulter 10 aufliegt, fest mit dem Abutment 2 verbunden, indem die Kopfschraube in die Gewindebohrung 9 des Abutments 2 eingeschraubt wird. Bei der Darstellung nach Figur 1 ist als Zahnprothesenkomponente eine Brücke B vorgesehen, die zwei Verbindungsstellen für die Fixierung an entsprechenden Implantaten 1 vorsieht. Lediglich beispielhaft weist die Brücke B rechtsseitig ein eingebrachtes Adapterteil 5 und linksseitig ein eingesetztes Abutment 2 auf. Um die Brücke B auf die in die Implantate eingesetzten Abutments 2 des Kieferknochens K aufsetzen zu können, muss das linke, mit seinem Wurzelbereich 6 nach oben ragende Abutment 2 am Brückenkörper B entfernt werden. Die Darstellung gemäß Figur 1 soll demzufolge lediglich die unterschiedlichen Varianten darstellen, ohne dass die Brücke B in den dargestellten Ausführungen tatsächlich auf die beiden im Kieferknochen K eingesetzten Abutments 2 aufgesetzt werden kann.

Die Zahnkrone Z wird gemäß der Pfeildarstellung in Figur 7 auf den Kopfabschnitt 3 des Abutments 2 mit ihrem bereits eingebrachten Adapterteil 5 aufgesetzt und mit dem Abutment 2 verschraubt.

## Patentansprüche

1. Abutment für ein Implantatsystem mit einem in einem Implantat verankerbaren Wurzelabschnitt sowie mit einem für die Aufnahme einer Prothesenkomponente vorgesehenen Kopfabschnitt, wobei eine Mantelfläche des Kopfabschnittes (3) rotationssymmetrisch zu einer Mittellängsachse (L) des Abutments (2) gestaltet ist und sich zu einer dem Wurzelabschnitt (6, 7) gegenüberliegenden Stirnseite hin verjüngt, wobei das Abutment (2) einstückig gestaltet ist, wobei der Wurzelabschnitt (6, 7) ein Außengewinde aufweist, das in ein Innengewinde eines Implantates einschraubbar ist, und wobei der Kopfabschnitt (3) eine zu seiner Stirnseite hin offene Bohrung mit einem Innengewinde zur Sicherung einer Prothesenkomponente oder eines Adapterteiles aufweist, **dadurch gekennzeichnet, dass** der Kopfabschnitt (3) oberhalb des Innengewindes innenseitig mit Werkzeugangriffsflächen (8) für die drehschlüssige Aufnahme eines Drehwerkzeuges versehen ist.

2. Abutment nach Anspruch 1, **dadurch gekennzeichnet, dass** eine obere Randfläche einer Ringschulter (4) des Kopfabschnittes (3) gegenüber einer radialen zu der Mittellängsachse (L) in einem Winkelbereich zwischen 1° und 2° nach außen ansteigt.

3. Abutment nach Anspruch 1, **dadurch gekennzeichnet, dass** dem Kopfabschnitt (3) eine Befestigungsschraube zugeordnet ist, die zur Fixierung der Prothesenkomponente (B, Z) oder des Adapterteiles (5) in das Innengewinde einschraubbar ist.

4. Abutment nach Anspruch 1, **dadurch gekennzeichnet, dass** der Kopfabschnitt (3) konisch verjüngt gestaltet ist.

5. Abutment nach Anspruch 4 **dadurch gekennzeichnet, dass** eine Neigung der Mantelfläche des Kopfabschnittes (3) relativ zu der Mittellängsachse (L) in einem Winkelbereich zwischen 0° und 25° vorgesehen ist.

6. Abutment nach Anspruch 1, **dadurch gekennzeichnet, dass** dem Kopfabschnitt (3) ein separates, glockenartiges Adapterteil (5) zugeordnet ist, dessen Innenmantel (11) komplementär zu der Mantelfläche des Kopfabschnittes (3) rotationssymmetrisch zu einer Mittellängsachse (M) und verjüngt gestaltet ist.

7. Abutment nach Anspruch 6, **dadurch gekennzeichnet, dass** das glockenartige Adapterteil (5) eine zu einer Mittellängsachse (M) konzentrische Durchtrittsöffnung aufweist, die von einer als Auflagefläche für ein Befestigungselement dienenden Ringschulter (10) umgrenzt ist.

8. Abutment nach Anspruch 6 oder 7, **dadurch gekennzeichnet, dass** ein Außenmantel (12) des Adapterteiles (5) rotationssymmetrisch zu der Mittellängsachse (M) und zu einem Stirnende hin verjüngt gestaltet ist.

9. Abutment nach wenigstens einem der vorhergehenden Ansprüche, **dadurch gekennzeichnet, dass** das Abutment (2) und/oder das Adapterteil (5) aus Metall, insbesondere Titan, und/oder Keramik, insbesondere Zirconiumoxid, aufgebaut sind.

10. Abutment nach wenigstens einem der vorhergehenden Ansprüche, **dadurch gekennzeichnet, dass** der Kopfabschnitt (3) und/oder das Adapterteil (5) und/oder eine Prothesenkomponente (B, Z) stoff- oder kraftschlüssig miteinander verbindbar sind.

11. Abutment nach Anspruch 1, **dadurch gekennzeichnet, dass** der Wurzelabschnitt (6, 7) durch einen mittleren zylindrischen Abschnitt und einen unteren Gewindeabschnitt, der das Aussengewinde umfasst, gebildet ist.

## Claims

1. An abutment for an implant system, comprising a root section that can be anchored in an implant and comprising a head section for the accommodation of a prosthetic component, wherein a peripheral surface of the head section (3) is rotationally symmetrical in relation to a longitudinal center axis (L) of said abutment (2) and is tapered toward an end face opposite to said root section (6, 7), wherein said abutment (2) is designed in one piece, wherein said root section (6, 7) has an exterior thread adapted to be screwed into an interior thread of an implant, and wherein said head section (3) has a bore which is open toward the end face of said head section and has an interior thread for securing a prosthetic component or an adapter element, **characterized in that** said head section (3), above the interior thread on the interior side, is provided with tool-engaging surfaces (8) for the rotationally locked accommodation of a turning tool.

2. The abutment according to claim 1, **characterized in that** an upper marginal surface of an annular shoulder (4) of said head section (3) rises towards the outside in relation to a radial to the longitudinal center axis (L) in an angular range of from 1° to 2°.

3. The abutment according to claim 1, **characterized in that** a fastening screw is assigned to said head section (3), which screw is to be screwed into the interior thread for fixing the prosthetic component (B, Z) or the adapter element (5).

4. The abutment according to claim 1, **characterized in that** said head section (3) is conically tapered.

5. The abutment according to claim 4, **characterized in that** an inclination of the peripheral surface of the head section (3) relatively to the longitudinal center axis (L) is provided in an angular range of from 0° to 25°.

6. The abutment according to claim 1, **characterized in that** a separate, bell-shaped adapter element (5) is assigned to said head section (3), where the inside surface (11) is complementary to said peripheral surface of said head section (3) and is rotationally symmetrical to a longitudinal center axis (M) and tapered.

7. The abutment according to claim 6, **characterized in that** said bell-shaped adapter element (5) has a through hole which is concentric with a longitudinal center axis (M) and which is delimited by an annular shoulder (10) serving as a contact surface for a securing element.

8. The abutment according to claim 6 or 7, **characterized in that** a peripheral surface (12) of said adapter element (5) is rotationally symmetrical to said longitudinal center axis (M) and is tapered towards a front end.

9. The abutment according to at least one of the preceding claims, **characterized in that** said abutment (2) and/or said adapter element (5) are composed of metal, more particularly titanium, and/or ceramics, more particularly zirconium oxide.

10. The abutment according to at least one of the preceding claims, **characterized in that** said head section (3) and/or said adapter element (5) and/or a prosthetic component (B, Z) are interconnectable by material-bonding engagement or force-fitting connection.

11. The abutment according to claim 1, **characterized in that** said root section (6, 7) is composed of a central cylindrical section and a lower threaded section which comprises the outer thread.

## Revendications

1. Butée pour un système d'implant comprenant une section de racine ancrable dans un implant ainsi que comprenant une section de tête prévue pour recevoir un composant de prothèse, une surface périphérique extérieure de la section de tête (3) présentant une forme à symétrie de révolution par rapport à un axe longitudinal central (L) de la butée (2) et se rétrécissant vers une face frontale opposée à la section de racine (6, 7), la butée étant conçue en une seule pièce, la section de racine (6, 7) présentant un filetage extérieur vissable dans un filetage intérieur d'un implant, et la section de tête (3) présentant un trou ouvert vers sa face frontale comportant un filetage intérieur pour attacher un composant de prothèse ou un élément adaptateur, **caractérisée en ce que** la section de tête (3) au-dessus du filetage intérieur sur le côté intérieur est pourvue de surfaces d'engagement d'outil (8) pour le logement fixe en rotation d'un outil de tournage.

2. Butée selon la revendication 1, **caractérisée en ce qu'**une surface marginale supérieure d'un épaulement annulaire (4) de la section de tête (3) monte vers l'extérieur par rapport à une radiale de l'axe longitudinal central (L) dans une plage angulaire de 1° à 2°.

3. Butée selon la revendication 1, **caractérisée en ce qu'**une vis de fixation est fournie à la section de tête (3), laquelle vis est vissable dans le filetage intérieur pour fixer le composant de prothèse (B, Z) ou l'élément adaptateur (5).

4. Butée selon la revendication 1, **caractérisée en ce que** la section de tête (3) se rétrécisse sous forme conique.

5. Butée selon la revendication 4, **caractérisée en ce qu'**une inclinaison de la surface périphérique extérieure de la section de tête (3) relativement à l'axe longitudinal central (L) est prévue dans une plage angulaire de 0° à 25°.

6. Butée selon la revendication 1, **caractérisée en ce qu'**un élément adaptateur (5) séparé en forme de cloche est fournie à la section de tête (3), dont la périphérie intérieure (11) est complémentaire à la surface périphérique extérieure de la section de tête (3) de forme à symétrie de révolution par rapport à un axe longitudinal central (M) et se rétrécisse.

7. Butée selon la revendication 6, **caractérisée en ce que** l'élément adaptateur (5) en forme de cloche présente un trou de passage concentrique par rapport à un axe longitudinal central (M) et délimité par un épaulement annulaire (10) agissant comme surface d'appui pour un élément de fixation.

8. Butée selon la revendication 6 ou 7, **caractérisée en ce qu'**une périphérie extérieure (12) de l'élément adaptateur (5) se présente sous une forme à symétrie de révolution par rapport à l'axe longitudinal central (M) et se rétrécisse vers une extrémité frontale.

9. Butée selon au moins une des revendications précédentes, **caractérisée en ce que** la butée (2) et/ou l'élément adaptateur (5) sont constitués de métal, en particulier de titane, et/ou de céramique, en particulier d'oxyde de zirconium.

10. Butée selon au moins une des revendications précédentes, **caractérisée en ce que** la section de tête (3) et/ou l'élément adaptateur (5) et/ou un composant de prothèse (B, Z) sont interconnectables par liaison par complémentarité de matières ou par liaison solidaire.

11. Butée selon la revendication 1, **caractérisée en ce que** la section de racine (6, 7) est composée d'une section cylindrique centrale et une section filetée inférieure comportant un filetage extérieur.
